# EUROPEAN PATENT APPLICATION

(11) **EP 0 959 408 A2**
(43) Date of publication of application: **24.11.1999**
(21) Application number: 99303905.6
(22) Date of filing: 19.05.1999
(51) Int. Cl.: G06F 11/22

(54) **Acquiring device-configuration information during a startup of information-processing device**

(30) Priority: 20.05.1998 JP 15537398
(71) Applicant: FUJITSU LIMITED, Kawasaki-shi, Kanagawa 211-8588 (JP)
(72) Inventor: Oyama, Takashi, c/o Fujitsu Limited, Kawasaki-shi, Kanagawa 211-8588 (JP); Takahashi, Nobuki, c/o Fujitsu Limited, Kawasaki-shi, Kanagawa 211-8588 (JP); Sasaki, Akihiko, c/o Fujitsu Limited, Kawasaki-shi, Kanagawa 211-8588 (JP); Murakami, Kouichi, c/o Fujitsu Personal Computer, Tokyo 206-0801 (JP)
(74) Representative: Hitching, Peter Matthew

(57) **Abstract**

A method of obtaining device-configuration information, for use during startup of an information-processing device, includes the steps of detecting (S2-6) whether a housing of a device is open and obtaining (S2-4) device-configuration information regarding devices connected to the device when the step of detecting indicates that the housing has been open.

## Description

### BACKGROUND OF THE INVENTION

### 1. Field of the Invention

The present invention generally relates to a method of, an information processing device for, and a control circuit for obtaining device information as well as a computer-readable memory medium having a program recorded therein for performing the method of obtaining device information. The present invention particularly relates to a method of, an information processing device for, and a control circuit for obtaining information on a system configuration regarding connected peripherals as well as a computer-readable memory medium having a program embodied therein for performing the method of obtaining information on a system configuration regarding connected peripherals

### 2. Description of the Related Art

Fig.1 is an illustrative drawing showing an exemplary appearance of a related-art personal computer.

A personal computer 1 includes a computer 2, a keyboard 3, a mouse 4, and a display 5.

Fig.2 is a flowchart of an exemplary startup procedure of a related-art personal computer.

When power is turned on with respect to the personal computer 1 (step S1-1), a BIOS (basic input output system) is activated (step S1-2) in order to make a basic setting to an input/output hardware configuration.

First, the BIOS accesses a ROM which is built in a device connected to IDE, a PCI bus, and a SCSI bus, and obtains device-configuration information regarding this device stored in the ROM. Then, the BIOS stores the device-configuration information "ATA3 IDENTIFY DEVICE" in a non-volatile RAM (step S1-3). After this, other processes which are part of the startup procedure are performed before the procedure ends (step S1-4).

The device-configuration information obtained by the BIOS includes setting information such as a memory volume, a type of an access mode, etc., if the pertinent device is a hard drive, for example. This information is used for displaying of a used memory volume, access control, etc.

There are two different ways to obtain the device-configuration information. One is a manual mode and, the other is an automatic mode. In the manual mode, device-configuration information is input by manual operation. The device-configuration information is then stored in a non-volatile RAM.

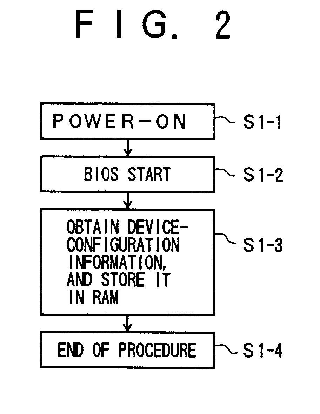

In the automatic mode, operations as described in connection with the flowchart of Fig.2 are performed. That is, device-configuration information is obtained automatically from a memory of the device. The device-configuration information obtained in an automatic manner is stored in a system RAM. In the automatic mode, the information stored in the system RAM is also stored in a non-volatile RAM in order to insure consistency of the device-configuration information.

Changes to a system configuration such as hocking up of a new device and removal or replacement of an existing device are generally made during a period of power off. Because of this, each time power is turned on, it is possible that a system configuration may have been changed during a time of power off. In the automatic mode, therefore, the BIOS obtains the device-configuration information each time the power is switched on.

In what follows, the device-configuration information "ATA3 IDENTIFY DEVICE" regarding a device connected to an IDE bus will be described.

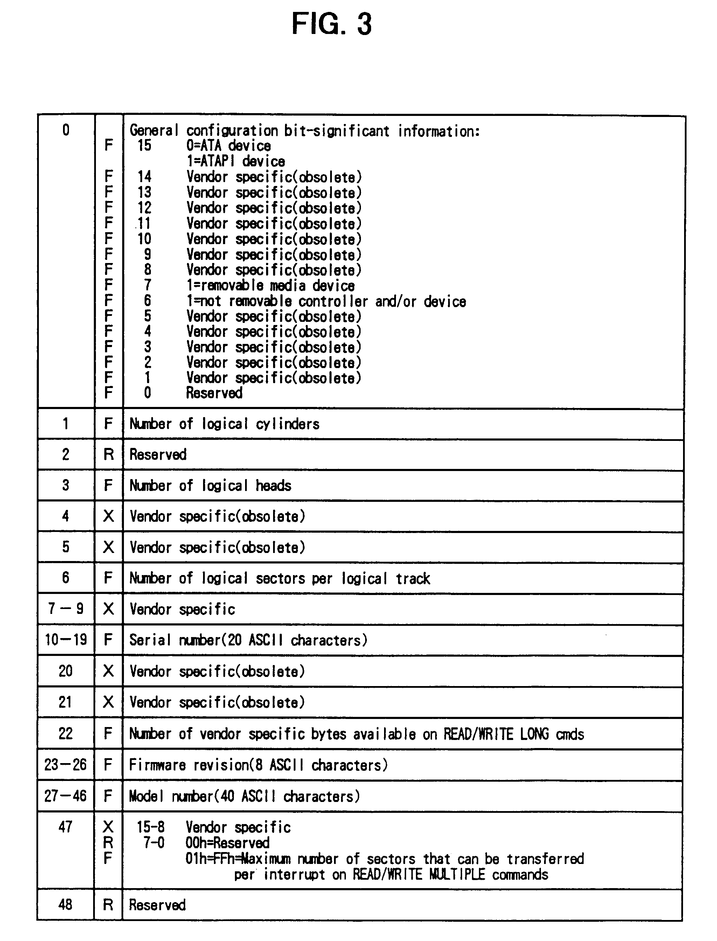

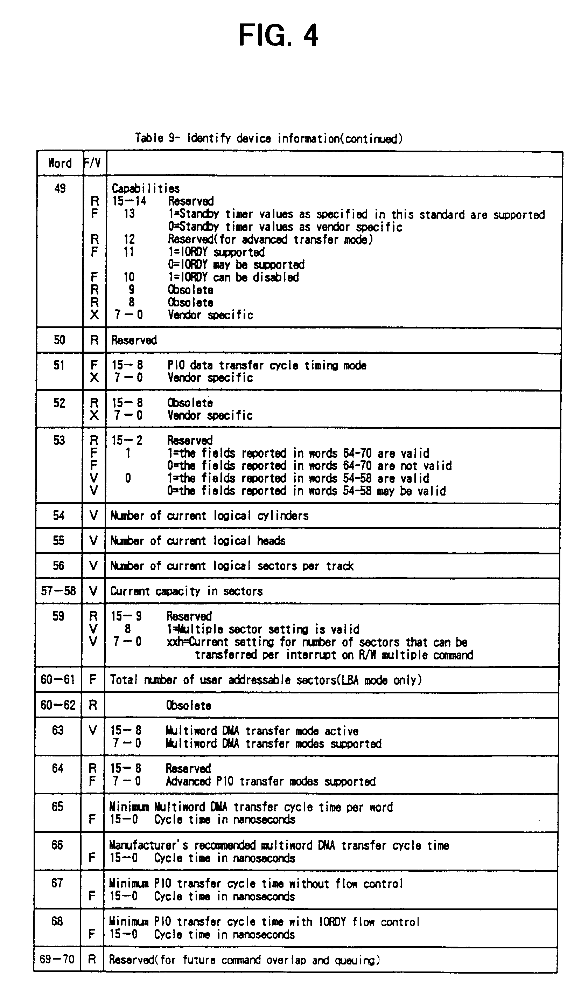

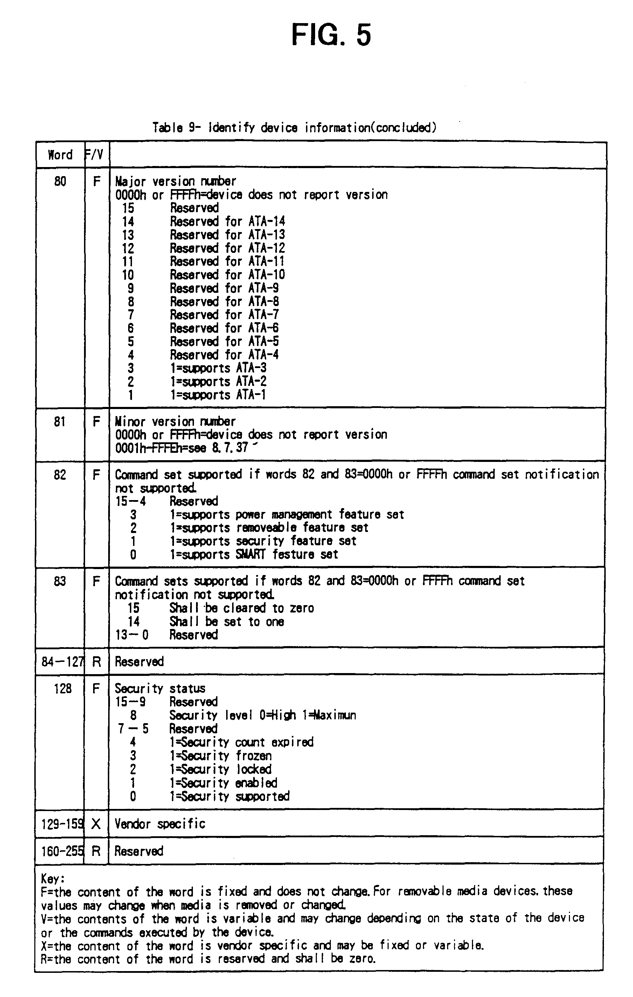

Figs.3, 4, and 5 are illustrative drawings for explaining related-art device-configuration information obtained by a BIOS.

The device-configuration information obtained by the BIOS includes 0-255 words shown in Figs.3 through 5. The contents of Figs.3 through 5 are shown in INFORMATION TECHNOLOGY AT Attachment-3 (ATA-3) Interface, 26. Oct. 1995, P.61-70, which is available at a T13 forum on Internet FTP://fission.dt.wdc.com/.

As shown in Figs.3 through 5, the device-configuration information includes "General configuration bit-significant information" information in the O-th word, "Number of logical cylinders" information in the first word, "Number of logical heads" information in the third word, "Number of logical sectors per logical track" information in the sixth word, "Serial number" information in the tenth through nineteenth words, "Number of Vendor specific bytes" information in the twenty second word, "Firmware revision" information in the twenty third through twenty sixth words, "Model number" information in the twenty seventh through forty sixth words, "Capabilities" information in the forty ninth word, "PIO data transfer cycle timing mode" information in the fifty first word, "Number of current logical cylinders" information in the fifty fourth word, "Number of current logical heads" information in the fifty fifth word, "Number of current logical sectors per track" information the fifty sixth word, "Current capacity in sectors" information in the fifty seventh and fifty eighth words, "Total number of user addressable sectors" information in the sixtieth and sixty first words, "Multiword DMA transfer mode active" information in the sixty third word, "Minimum multiword DMA transfer cycle time per word" information in the sixty fifth word, "Manufacturer's recommended multiword DMA cycle time" information in the sixty sixth word, "Minimum PIO transfer cycle time without flow control" information in the sixty seventh word, "Minimum PIO transfer cycle time with IORDY flow control" information in the sixty eighth word, "Major version number" information in the eightieth word, "Minor version number" information in the eighty first word, "Command sets supported" information in the eighty second and eighty third words, and "Vendor specific" information in some of the remaining words.

"General configuration bit-significant information" in the O-th word represents settings regarding a device configuration.

"Number of logical cylinders" information in the first word indicates the number of logical cylinders available to a user in a default translation mode.

"Number of logical heads" information in the third word shows the number of logical heads with respect to logical cylinders available to a user in the default translation mode.

"Number of logical sectors per logical track" information in the sixth word indicates the number of logical sectors with respect to logical tracks available to a user in the default translation mode.

"Serial number" information in the tenth through nineteenth words represents a serial number of the device.

"Number of Vendor specific bytes" information in the twenty second word indicates the number of bits which is specific to a vendor, and is allocated to the device.

"Firmware revision" information in the twenty third through twenty sixth words specifies a version number of firmware.

"Model number" information in the twenty seventh through forty sixth words represents a model number of the device.

"Capabilities" information in the forty ninth word is an indication of a device capacity. For example, information indicative of whether a standby timer function is supported is stored in this word.

"PIO data transfer cycle timing mode" information in the fifty first word is used for storing a transfer timing of a PIO (programmed input/output).

"Number of current logical cylinders" information in the fifty fourth word indicates the number of logical cylinders in a current translation mode.

"Number of current logical heads" information in the fifty fifth word represents the number of logical heads with respect to logical cylinders in the current translation mode.

"Number of current logical sectors per track" information in the fifty sixth word signifies the number of logical sectors with respect to logical tracks in the current translation mode.

"Current capacity in sectors" information in the fifty seventh and fifty eighth words indicates an available sector volume.

"Total number of user addressable sectors" information in the sixtieth and sixty first words shows the total number of sectors available to the user.

"Multiword DMA transfer mode active" information in the sixty third word indicates a valid/invalid status of the multi-word-DMA-transfer mode.

"Minimum multiword DMA transfer cycle time per word" information in the sixty fifth word represents a minimum cycle time per word in the multi-word-DMA-transfer mode.

"Manufacturer's recommended multiword DMA cycle time" information in the sixty sixth word specifies a cycle time recommended by a manufacturer during the multi-word-DRAM-transfer mode.

"Minimum PIO transfer cycle time without flow control" information in the sixty seventh word indicates a minimum cycle time during a PIO transfer other than during a time period of flow control.

"Minimum PIO transfer cycle time with IORDY flow control" information in the sixty eighth word indicates a minimum cycle time during the PIO transfer at the time of flow control.

"Major version number" information in the eightieth word and "Minor version number" information in the eighty first word represent version information of the device.

"Command sets supported" information in the eighty second and eighty third words is a command set for supporting the device.

In a related-art personal computer, device-configuration information is obtained regardless of an actual change to a system configuration each time the BIOS operates at such times as during a power-on operation, an OS-restart operation, a personal-computer-reset operation. This is done in order to make sure that the device-configuration information is reliably obtained when a system configuration is changed during a power off of the computer. Because of the need for such an operation, a whole series of a startup procedure becomes undesirably lengthy.

Accordingly, there is a need for a method of, an information processing device for, and a control circuit for obtaining device-configuration information while shortening a startup time, and for a computer-readable memory medium having a program embodied therein for performing the method.

### SUMMARY OF THE INVENTION

Accordingly, it is a general object of the present invention to provide a scheme for obtaining device-configuration information such that the scheme can satisfy the need described above.

It is another and more specific object of the present invention to provide a method of, an information processing device for, and a control circuit for obtaining device-configuration information while shortening a startup time, and, also, to provide a computer-readable memory medium having a program embodied therein for performing the method.

In order to achieve the above objects according to the present invention, a method of obtaining device-configuration information includes the steps of a) detecting whether a case of a device is open, and b) obtaining device-configuration information regarding devices connected to the device when the step a) indicates that the case has been open.

In the method described above, it is ascertained that the device configuration has been changed when there is an indication that the case has been open, and, then, the device-configuration information is obtained. If the situation tells that there is no need to obtain the device-configuration information, no action is taken, thereby reducing a startup time of the device.

According to another aspect of the present invention, the method as described above further includes a step of keeping in storage an open/closed status of the case detected by the step of detecting, wherein the step b) obtains the device-configuration information when the open/closed status of the case indicates that the case has been open.

In the method described above, the device-configuration information is obtained based on a record of the past indicative of whether the case has been open. The device-configuration information is thus obtained when the case has ever been open.

According to another aspect of the present invention, the method as described above is such that the step b) obtains the device-configuration information according to the open/closed status of the case when a device-information-acquirement flag is set to valid, and obtains the device-configuration information regardless of the open/closed status of the case when the device-information-acquirement flag is set to invalid.

In the method described above, a choice can be made between two different operations. One is an operation in which the device-configuration information is obtained according to the open/closed status of the case which has been recorded, and the other is an operation in which the device-configuration information is obtained regardless of the open/closed status of the case.

According to another aspect of the present information, the method as described above is such that the step b) is performed at a time when the device is switched on or when a startup program of the device is executed.

In the method described above, a startup procedure including obtaining the device-configuration information is simplified where the startup procedure is performed when a startup program is executed or when power is turned on in the device. Thus, a startup of the device can be quickly made.

The objects presented earlier can also be achieved by a device having an information processing unit which operates based on device-configuration information obtained with regard to devices connected thereto. The device includes a case which houses the information processing unit, a case-open/closed-detection unit which detects whether the case is open, and a device-configuration-information obtaining unit which obtains device-configuration information regarding devices connected to the information processing unit when the case-open/closed-detection unit indicates that the case has been open.

In the device described above, it is ascertained that the device configuration has been changed when there is an indication that the case has been open, and, then, the device-configuration information is obtained. If the situation tells that there is no need to obtain the device-configuration information, no action is taken, thereby reducing a startup time of the device.

According to another aspect of the present invention, the device as described above further includes a detection-result storing unit which keeps in storage a detection result obtained by the case-open/closed-detection unit, and supplies the detection result to the device-configuration-information obtaining unit.

In the device described above, the device-configuration information is obtained based on a record of the past indicative of whether the case has been open. The device-configuration information is thus obtained when the case has ever been open.

According to another aspect of the present invention, the device as described above further includes a setting unit which is set either to a valid status or to an invalid status, wherein if the setting unit holds the valid status, the device-configuration-information obtaining unit obtains the device-configuration information when the case-open/closed-detection unit indicates that the case has been open, whereas if the setting unit holds the invalid status, the device-configuration-information obtaining unit obtains the device-configuration information regardless of the detection result obtained by the case-open/closed-detection unit.

In the device described above, the possibility that the device configuration has been changed is assessed based on whether the case has been open, and the device-configuration information is obtained only when there is a possibility that the device configuration has been changed. When there is no chance that a change has been made to the device configuration because the case has never been open, a process of obtaining the device-configuration information is not performed, thereby shortening a startup time of the device.

According to another aspect of the present invention, the device as described above is such that the device-configuration-information obtaining unit obtains the device-configuration information at a time when the information processing unit is switched on or when a startup program of the information processing unit is executed.

In the device described above, a startup procedure including obtaining the device-configuration information is simplified where the startup procedure is performed when a startup program is executed or when power is turned on in the device. Thus, a startup of the device can be quickly made.

The objective presented earlier can also be achieved by a control circuit having an information processing unit which operates based on device-configuration information obtained with regard to devices connected thereto and having a case which houses the information processing unit. The control circuit includes a device-configuration-information obtaining unit which obtains device-configuration information regarding devices connected to the information processing unit when it is detected that the case has been open.

In the control circuit described above, it is ascertained that the device configuration has been changed when there is an indication that the case has been open, and, then, the device-configuration information is obtained. If the situation tells that there is no need to obtain the device-configuration information, no action is taken, thereby reducing a startup time of the device.

According to another aspect of the present invention, the control circuit as described above further includes a detection unit which detects whether the case is open, wherein the device-configuration-information obtaining unit obtains the device-configuration information when the detection unit indicates that the case has been open.

In the control circuit described above, it is ascertained that the device configuration has been changed when there is an indication that the case has been open, and, then, the device-configuration information is obtained. If the situation tells that there is no need to obtain the device-configuration information, no action is taken, thereby reducing a startup time of the device.

According to another aspect of the present invention, the control circuit as described above further includes a setting unit which is set either to a valid status or to an invalid status, wherein if the setting unit holds the valid status, the device-configuration-information obtaining unit obtains the device-configuration information when the detection unit indicates that the case has been open, whereas if the setting unit holds the invalid status, the device-configuration-information obtaining unit obtains the device-configuration information regardless of a detection result obtained by the detection unit.

In the control circuit described above, a choice can be made between two different operations. One is an operation in which the device-configuration information is obtained according to a detection result obtained by the detection unit, and the other is an operation in which the device-configuration information is obtained regardless of the detection result.

According to another aspect of the present invention, the control circuit as described above is such that the device-configuration-information obtaining unit obtains the device-configuration information at a time when the information processing unit is switched on or when a startup program of the information processing unit is executed.

In the control circuit described above, a startup procedure including obtaining the device-configuration information is simplified where the startup procedure is performed when a startup program is executed or when power is turned on in the device. Thus, a startup of the device can be quickly made.

The objects presented earlier can also be achieved by a computer-readable memory medium having a program therein for causing a computer to obtain device-configuration information. The program includes a case-open/closed-detection unit configured to detect whether a case of the computer is open, and a device-configuration-information obtaining unit configured to obtain device-configuration information regarding devices connected to the computer when the case-open/closed-detection unit indicates that the case has been open.

In the program described above, it is ascertained that the device configuration has been changed when there is an indication that the case has been open, and, then, the device-configuration information is obtained. If the situation tells that there is no need to obtain the device-configuration information, no action is taken, thereby reducing a startup time of the device.

According to another aspect of the present invention, the computer-readable memory medium as described above is such that the device-configuration-information obtaining unit obtains the device-configuration information according to a detection result obtained by the case-open/closed-detection unit when a device-information-acquirement flag is set to valid, and obtains the device-configuration information regardless of the detection result when the device-information-acquirement flag is set to invalid.

In the program described above, a choice can be made between two different operations. One is an operation in which the device-configuration information is obtained according to the detection result obtained by the case-open/closed-detection unit, and the other is an operation in which the device-configuration information is obtained regardless of the detection result.

According to another aspect of the present invention, the computer-readable memory medium as described above is such that the program is a startup program of the computer.

In the program described above, a startup procedure including obtaining the device-configuration information is simplified where the startup procedure is performed when a startup program is executed or when power is turned on in the device. Thus, a startup of the device can be quickly made.

Other objects and further features of the present invention will be apparent from the following detailed description when read in conjunction with the accompanying drawings.

### BRIEF DESCRIPTION OF THE DRAWINGS

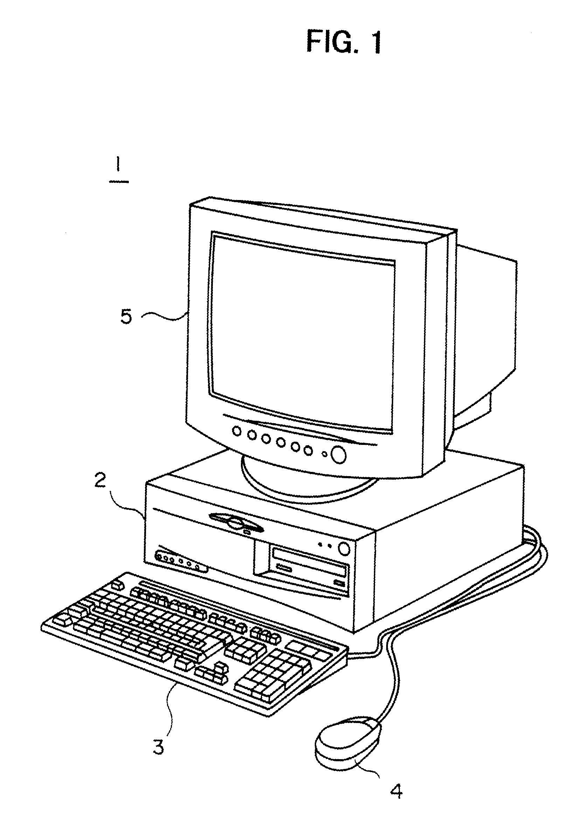

Fig.1 is an illustrative drawing showing an exemplary appearance of a related-art personal computer;
Fig.2 is a flowchart of an exemplary startup procedure of a related-art personal computer;
Figs.3 through 5 are illustrative drawings for explaining related-art device-configuration information obtained by a BIOS;

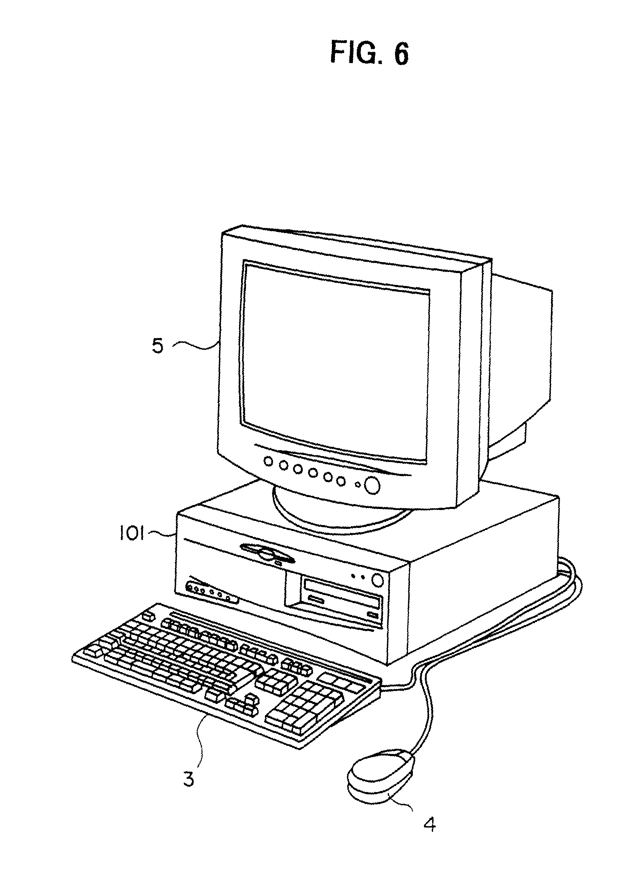

Fig.6 is an illustrative drawing showing a configuration of a personal computer according to a first embodiment of the present invention.

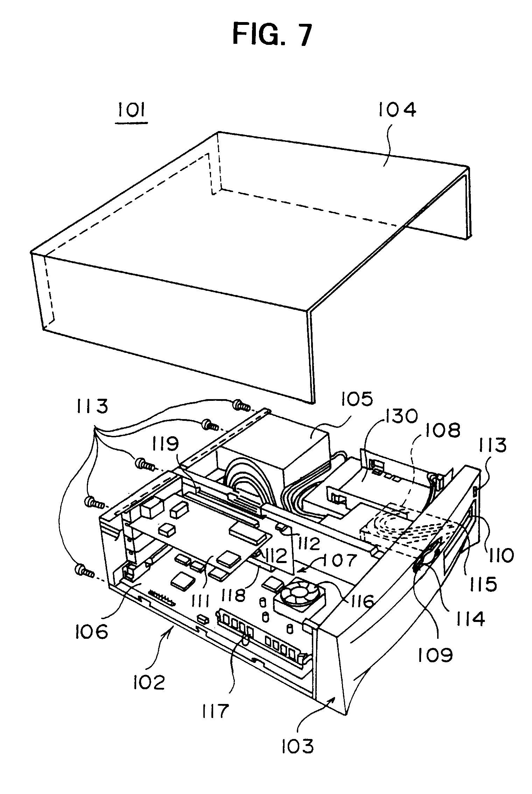

Fig.7 is an isometric view of the computer according to the first embodiment of the present invention;

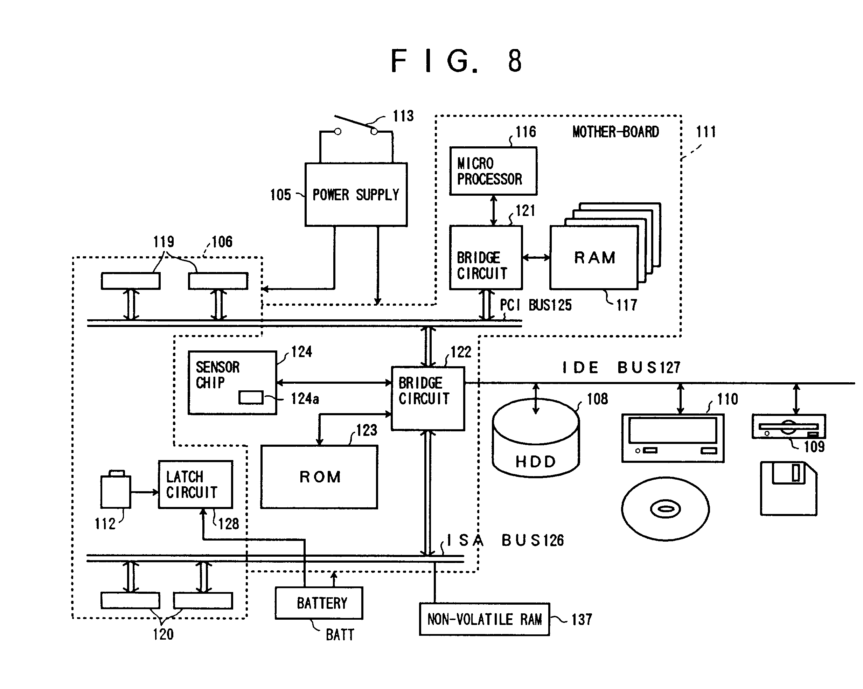

Fig.8 is a block diagram of the computer according to the first embodiment of the present invention;

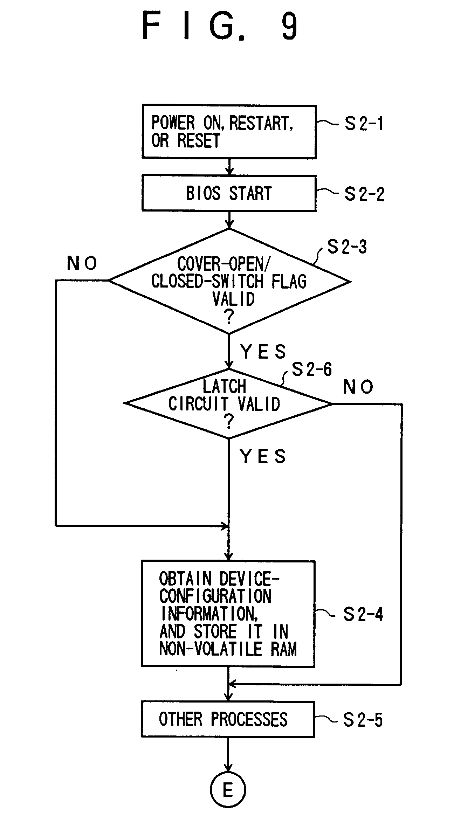

Fig.9 is a flowchart of a startup program of the personal computer according to the first embodiment of the present invention;

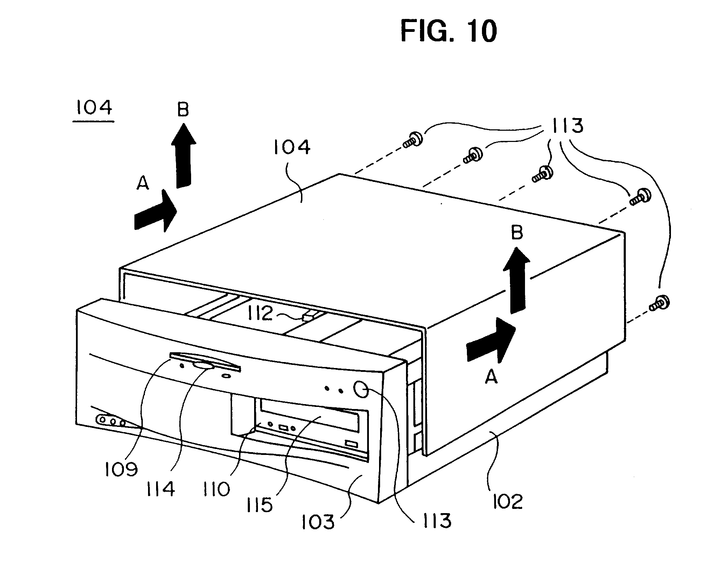

Fig.10 is an illustrative drawing for explaining how to remove a cover from the computer according to the first embodiment of the present invention;

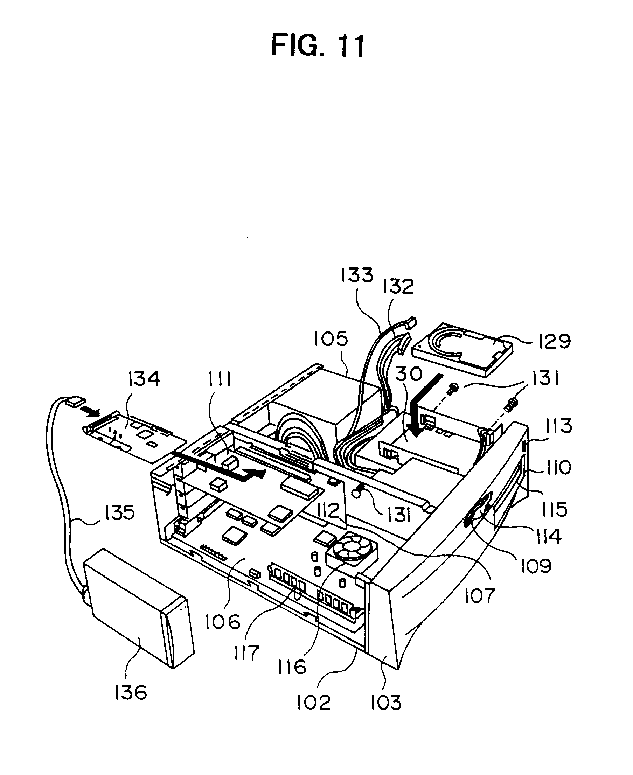

Fig.11 is an illustrative drawing for explaining how to add a device to the computer according to the first embodiment of the present invention;

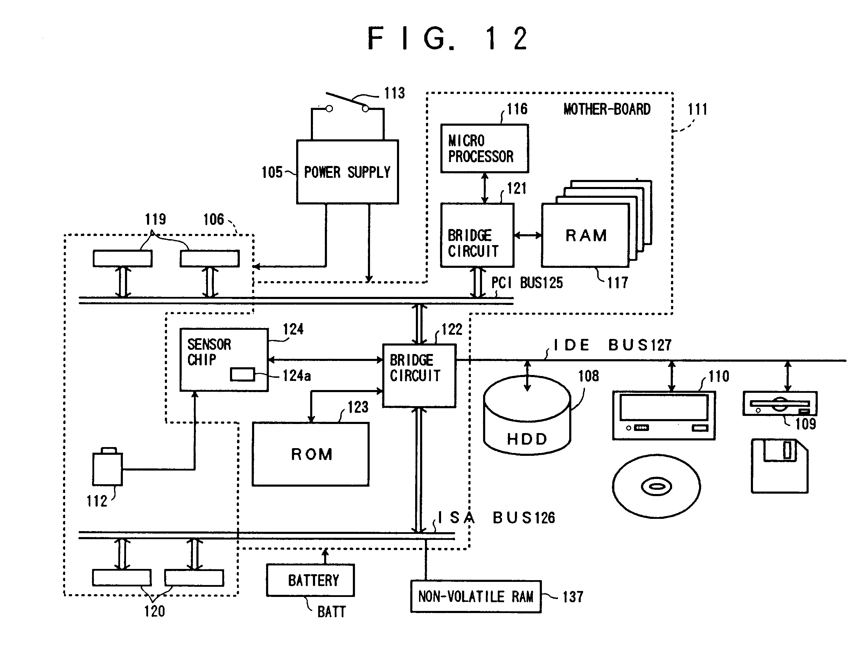

Fig.12 is a block diagram of a computer according to a second embodiment of the present invention; and

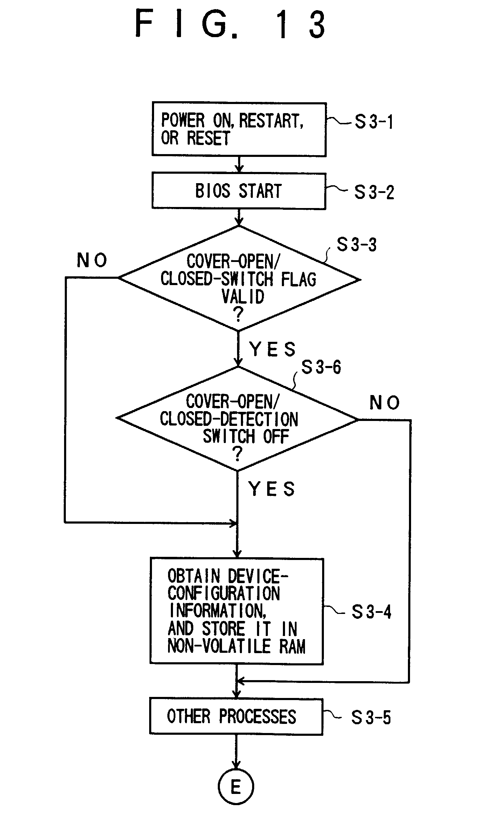

Fig.13 is a flowchart showing a procedure of a startup program according to the second embodiment of the present invention.

### DESCRIPTION OF THE PREFERRED EMBODIMENTS

In the following, embodiments in which a method of automatically obtaining device-configuration information is applied to a personal computer will be described with reference to the accompanying drawings.

Fig.6 is an illustrative drawing showing a configuration of a personal computer according to a first embodiment of the present invention. In Fig.6, the same elements as those of Fig.1 are referred to by the same numerals, and a description thereof will be omitted.

A personal computer 100 of this embodiment differs from the personal computer 1 in a configuration of a computer 101 and a procedure of a startup program.

The personal computer 100 includes the keyboard 3, the mouse 4, the display 5, and the computer 101.

The keyboard 3, the mouse 4, and the display 5 are connected to the computer 101. The keyboard 3 and the mouse 4 are used for supplying instructions and data to the computer 101.

The display 5 is used for displaying results of processing performed by the computer 101.

The computer 101 performs a startup program at the time of power on, an OS restart, and a reset, and obtains device-configuration information on built-in devices such as a hard drive, a floppy-disk drive, a CD-ROM drive, and various extension boards. After the startup operation, the computer 101 attends to processing such as data transfer based on the device-configuration information obtained during the startup operation.

Fig.7 is an isometric view of the computer according to the first embodiment of the present invention.

The computer 101 includes a frame 102, a front panel 103, and a cover 104, all of which together make up a case. Inside the case, the computer 101 includes a power supply 105, a mother board 106, a riser card 107, a built-in hard drive 108, a built-in floppy-disk drive 109, a built-in-CD-ROM drive 110, a built-in card 111, and a cover-open/closed-detection switch 112.

The frame 102 has the cover 104 attached thereto via screws 113, so that an opening is closed by the cover 104. On the frame 102 are fixedly mounted the mother board 106, the riser card 107, the built-in hard drive 108, the built-in floppy-disk drive 109, and the built-in-CD-ROM drive 110.

The front panel 103 is fixed to the front of the frame 102. The front panel 103 has a power switch 113, a floppy-disk-insertion opening 114 for the built-in floppy-disk drive 109, and a disk-tray-ejection unit 115 for the built-in-CD-ROM drive 110.

The cover 104 has a U shape, and covers the sides and the top of the frame 102.

The power supply 105 is provided near the back of the frame 102. A power cord (not shown) is connected to the power supply 105 to supply utility power thereto. The power supply 105 regulates supplied utility power, and provides power for each part of the computer.

The mother board 106 is provided in parallel to the bottom surface of the frame 102. The mother board 106 has a processor 116, a memory 117, a riser-card connector 118, etc., mounted thereon.

The riser card 107 is connected to the riser-card connector 118 mounted on the mother board 106, and is situated in parallel to the side of the frame 102. The riser card 107 has the cover-open/closed-detection switch 112, a PCI-bus connector 119, and an ISA-bus connector 120 mounted thereon.

The PCI-bus connector 119 and the ISA-bus connector 120 are connected to the built-in card 111, which is provided in parallel to the frame 102. The built-in card 111 is connected to the frame 102 via the riser card 107.

The cover-open/closed-detection switch 112 is fixedly mounted at a top end of the riser card 107, such that the cover-open/closed-detection switch 112 is operated according to whether the cover 104 is open or closed. The cover-open/closed-detection switch 112 is switched on when the cover 104 is open, and is switched off when the cover 104 is closed, for example. An on/off status of the cover-open/closed-detection switch 112 indicates an open/closed status of the cover 104. The detection result of the cover-open/closed-detection switch 112 is supplied to the frame 102 via the riser card 107.

In what follows, a configuration of the computer 101 will be described in detail.

Fig.8 is a block diagram of the computer according to the first embodiment of the present invention.

The computer 101 mainly includes the mother board 106, the riser card 107, the built-in hard drive 108, the built-in floppy-disk drive 109, and the built-in-CD-ROM drive 110.

The mother board 106 includes the microprocessor 116, the memory (system RAM) 117, bridge circuits 121 and 122, a ROM 123, a sensor chip 124, a PCI bus 125, an ISA bus 126, an IDE bus 127, and a non-volatile RAM 137.

The processor 116 performs processes according to programs loaded in the system RAM 117. The bridge circuit 121 is situated between the processor 116, the memory 117, and the PCI bus 125 so as to attend to control of data transfer therebetween.

The bridge circuit 122 is situated at an intersection between the PCI bus 125, the ISA bus 126, the IDE bus 127, the ROM 123, and the sensor chip 124. The bridge circuit 122 attends to control of data transfer between the PCI bus 125, the ISA bus 126, the IDE bus 127, the ROM 123, and the sensor chip 124.

The system RAM 117 is comprised of DRAMs or the like, and is used as a work area by the microprocessor 116.

The ROM 123 stores therein a BIOS (basic input output system) serving as a startup program. The startup program stored in the ROM 123 is loaded to the system RAM 117 when power of the power supply 105 is turned on by operating the power switch 113. Also, the startup program is loaded when a restart instruction is issued by the OS operating on the computer 101 or when a reset operation is performed on the keyboard 3. The startup program loaded to the system RAM 117 is then executed.

As will be described later in detail, the startup program obtains device-configuration information regarding devices connected to the PCI bus 125, the ISA bus 126, or the IDE bus 127. The startup program then stores the obtained device-configuration information in the non-volatile RAM 137.

The sensor chip 124 receives various sensor signals for monitoring purposes. The sensor chip 124 is connected to the riser card 107, and supplies a detection result to the mother board 106 when the detection result indicative of an open/closed status of the cover 104 is obtained by the cover-open/closed-detection switch 112. Also, the sensor chip 124 has a RAM 124a built therein.

The riser card 107 includes the PCI-bus connector 119, the ISA-bus connector 120, the cover-open/closed-detection switch 112, and a cover-open/closed-status latching circuit 128.

The PCI-bus connector 119 is connected to the PCI bus 125, and receives the built-in card 111 therein when the built-in card 111 is PCI-bus compatible. The ISA-bus connector 120 is connected to the ISA bus 126, and receives the built-in card 111 when the built-in card 111 is ISA-bus compatible. Further, a built-in-type hard drive is connected to a hard-drive-extension-placement unit 130, and is also connected to IDE-connection cable and a power cable.

The sensor chip 124 is comprised of a commercially available sensor chip IC. For example, LM80 manufactured by National Semiconductor may be used as the sensor chip 124. The sensor chip LM80 detects a plurality of sensor signals, and supplies them to he bridge circuit 122. The RAM 124a provided in the sensor chip 124 is used for setting a flag therein as an indication of what is detected. The sensor chip 124 receives power from a battery BATT, so that the contents of the RAM 124a are maintained even when power is turned off.

The cover-open/closed-detection switch 112 is situated at the top end of the riser card 107. The cover-open/closed-detection switch 112 is turned on when the cover 104 is open, and is turned off when the cover 104 is closed. The cover-open/closed-detection switch 112 is connected to the sensor chip 124 via the cover-open/closed-status latching circuit 128.

The cover-open/closed-status latching circuit 128 is driven by the battery BATT, and keeps operating even when the power switch 113 is turned off. The cover-open/closed-status latching circuit 128 holds therein an open/closed status obtained by the cover-open/closed-detection switch 112. The contents of the cover-open/closed-status latching circuit 128 are purged when a reset is instructed. When this happens, the contents of the cover-open/closed-status latching circuit 128 become invalid. When the cover-open/closed-detection switch 112 is switched off, i.e., when the cover 104 is open, the contents become valid.

The non-volatile RAM 137 stores the device-configuration information obtained by the BIOS at the time of a device startup.

In what follows, the startup program of the computer 101 will be described.

Fig.9 is a flowchart of the startup program of the personal computer according to the first embodiment of the present invention.

The power switch is turned on by a user (step S2-1). Alternatively, the OS operating on the computer 101 issues a restart instruction, or a reset operation is performed on the keyboard 3. In response, the BIOS starts operating (step S2-2).

The BIOS is capable of operating in one of two different modes. The first mode is used when the BIOS obtains the device-configuration information based on a check on the cover-open/closed-status latching circuit 128, and the second mode is used when the BIOS makes an access to peripheral devices under any circumstances to obtain the device-configuration information. Switching between the first mode and the second mode is made at the time of BIOS operation by checking a cover-open/closed-detection-switch flag F of the RAM 124a provided in the sensor chip 124. The cover-open/closed-detection-switch flag F is set to either a valid status or an invalid status by a process performed in advance.

After starting an operation thereof at step S2-2, the BIOS accesses the RAM 124a to check the status of the cover-open/closed-detection-switch flag F (step S2-3).

If the cover-open/closed-detection-switch flag F is found to be invalid at the step S2-3, i.e., if the second mode is selected, a process of obtaining device-configuration information is performed regardless of whether the cover 104 has been opened, so that the device-configuration information (ATA-3 IDENTIFY DEVICE) is acquired from all the connected devices as described in connection with Figs.3 through 6. The device-configuration information is then stored in the non-volatile RAM 137 (step S2-4). After the device-configuration information is obtained and stored in the non-volatile RAM 137 at the step S2-4, other processes of the startup procedure are performed (step S2-5).

If the cover-open/closed-detection-switch flag F is found to be valid at the step S2-3, i.e., if the first mode is selected, a check is made by accessing the cover-open/closed-status latching circuit 128 so as to determine whether the cover 104 has been opened (step S2-6).

If the step S2-6 finds that the cover-open/closed-status latching circuit 128 is valid so as to indicate the open status of the cover, it is ascertained that the cover 104 was open before the power is on with an aim of adding, taking out, or replacing a device such as a hard-drive, a card, or the like. In this case, device-configuration information (ATA-3 IDENTIFY DEVICE) is obtained from all the devices connected to the PCI bus 125, the ISA bus 126, and the IDE bus 127 at the step S2-4.

If the step S2-6 finds that the cover-open/closed-status latching circuit 128 holds an off status indicative of that the cover 104 has not been opened, it is ascertained that a change in a peripheral-device configuration such as adding, taking out, or replacing a hard-drive, a card, or the like has not been made. Accordingly, the startup program BIOS proceeds to perform other processes, and sets the computer to an initial state thereof (step S2-5).

After the cover-open/closed-status latching circuit 128 is accessed at the step S2-6, it is reset (steps S2-7, S2-8). Because of this reset operation, the cover-open/closed-status latching circuit 128 can latch a new status next time the cover is opened.

In what follows, a description will be given with regard to how to change devices of the computer 2 inside the cover 104.

Fig.10 is an illustrative drawing for explaining how to take out (open) the cover from the computer according to the first embodiment of the present invention.

When there is a need to add, remove, or replace a device with respect to the computer 101, the cover 104 is removed. In order to remove the cover 104, the screws 113 are taken out from the back of the computer 101 as shown in Fig.10. After taking out the screws 113, the cover 104 is slide toward the back as shown by arrows A. This sliding movement should fee the front end of the cover 104 from an engagement with the front panel 103, and, also, free the bottom ends of the cover 104 from an engagement with the frame 102. Then, the cover 104 is moved in a direction shown by arrows B to complete a removal operation.

While the cover 104 is out of place, a change is made to the device configuration.

Fig.11 is an illustrative drawing for explaining how to add a device to the computer according to the first embodiment of the present invention.

When a hard-drive extension 129 is to be installed, the hard-drive extension 129 is connected to an IDE-connection cable 132 extending from the mother board 106, and is also connected to a power cable 133 extending from the power supply 105. Then, the hard-drive extension 129 is mounted on the hard-drive-extension-placement unit 130, and is fixed by means of screws 131.

When there is a need to add a built-in card, a built-in extension card 134 is inserted into either the PCI-bus connector 119 or the ISA-bus connector 120, whichever is available and compatible with a pertinent bus type, provided on the riser card 107. The built-in extension card 134 may be an SCSI card. Such an SCSI card may be connected to an external hard drive 136 via an SCSI cable 135.

In order to install the hard-drive extension 129 and/or the built-in extension card 134 in the computer 101, the cover 104 needs to be removed as shown in Fig.10 and Fig.11. When the cover 104 is removed, the cover-open/closed-detection switch 112 is turned off, so that the cover-open/closed-status latching circuit 128 holds a status indicative of removal of the cover 104, i.e., holds a valid status.

The procedure of Fig.9 is performed when the power switch 113 is turned on after the cover 104 is closed subsequent to installing the hard-drive extension 129 and/or the built-in extension card 134 in the computer 101. This is the case even when the power switch 113 is tuned on while the cover 104 is open. Since the cover-open/closed-status latching circuit 128 holds a valid status indicative of the fact that the cover 104 has been opened, a check of the valid status of the cover-open/closed-status latching circuit 128 at the step S2-6 leads to the operation of the step S2-4 for obtaining the device-configuration information (ATA-3 IDENTIFY DEVICE) regarding all the devices connected to the PCI bus 125, the ISA bus 126, or the IDE bus 127. The information latched by the cover-open/closed-status latching circuit 128 is reset after it is accessed. Because of the reset operation, the cover-open/closed-status latching circuit 128 can be set to a valid status when the cover 104 is opened next time.

According to the first embodiment, there is no need to obtain the device-configuration information and to rewrite the non-volatile RAM 137 if it is found that no new configuration is in place, i.e., the cover 104 has not been opened. Because of this, the startup operation is simplified, and is shorter when the user switches on the power switch 113 or either when the OS operating on the computer 101 issues a restart instruction or when a reset operation is performed on the keyboard 3 of the personal computer 100.

In this embodiment, the cover-open/closed-status latching circuit 128 is provided for the purpose of holding the detection result obtained by the cover-open/closed-detection switch 112, so that the device-configuration information is obtained based on whether the cover 104 has been opened as well as whether the cover 104 is being open. The present invention is not limited to this configuration, and the device-configuration information may be obtained only based on whether the cover 104 is being open.

The first embodiment has been described mainly with reference to a case in which devices are added to the existing configuration. Since the device-configuration information is obtained based on whether the cover 104 has been opened, however, this embodiment is equally applicable to cases where devices are removed or replaced as long as such operation is conducted by opening the cover 104.

Fig.12 is a block diagram of a computer according to a second embodiment of the present invention. In Fig.12, the same elements as those of Fig.8 are referred to by the same numerals, and a description thereof will be omitted.

A computer 200 of the second embodiment differs from the computer 101 of Fig.8 in that the cover-open/closed-detection switch 112 is connected to the sensor chip 124 without the cover-open/closed-status latching circuit 128 intervening therebetween. In the second embodiment, therefore, the detection result indicates that the cover 104 is open only when the power switch 113 is turned on while the cover 104 is being open.

Fig.13 is a flowchart showing a procedure of a startup program according to the second embodiment of the present invention.

The power switch 113 is turned on by a user (step S3-1). Alternatively, the OS operating on the computer 101 issues a restart instruction, or a reset operation is performed on the keyboard 3. In response, the BIOS starts operating (step S3-2).

The BIOS is capable of operating in one of two different modes. The first mode is used when the BIOS obtains the device-configuration information based on the status of the cover-open/closed-detection switch 112, and the second mode is used when the BIOS makes an access to peripheral devices under any circumstances to obtain the device-configuration information. Switching between the first mode and the second mode is made at the time of BIOS operation by checking the cover-open/closed-detection-switch flag F of the RAM 124a provided in the sensor chip 124. The cover-open/closed-detection-switch flag F is set to either a valid status or an invalid status by a process performed in advance.

After starting an operation thereof at step S3-2, the BIOS accesses the RAM 124a to check the status of the cover-open/closed-detection-switch flag F (step S3-3).

If the cover-open/closed-detection-switch flag F is found to be invalid at the step S3-3, a process of obtaining device-configuration information is performed regardless of whether the cover 104 is open, so that the device-configuration information (ATA-3 IDENTIFY DEVICE) is acquired from all the connected devices as described in connection with Figs.3 through 6. The device-configuration information is then stored in the non-volatile RAM 137 (step S3-4). After the device-configuration information is obtained and stored in the non-volatile RAM 137 at the step S3-4, other processes of the startup procedure are performed (step S3-5).

If the cover-open/closed-detection-switch flag F is found to be valid at the step S3-3, a status of the cover-open/closed-detection switch 112 is checked by using the sensor chip 124 so as to determine whether the cover 104 is open (step S3-6).

If the step S3-6 finds that the cover 104 is open, it is ascertained that a device such as a hard-drive extension or a card is added, removed, or replaced. In this case, device-configuration information (ATA-3 IDENTIFY DEVICE) is obtained from all the devices connected to the PCI bus 125, the ISA bus 126, and the IDE bus 127 (step S3-4).

After the device-configuration information is acquired at the step S3-4, the startup program BIOS proceeds to perform other processes to set the computer to an initial state thereof (step S3-5).

If the step S3-6 finds that the result obtained from the cover-open/closed-detection switch 112 via the sensor chip 124 indicates that the cover 104 is not open, it is ascertained that a change in a device configuration such as adding, taking out, or replacing a hard-drive, a card, or the like has not been made. Without obtaining the device-configuration information (ATA-3 IDENTIFY DEVICE) from devices connected to the PCI bus 125, the ISA bus 126, or the IDE bus 127, the procedure goes to the step S3-5, where other processes are performed.

According to the present embodiment, there is no need to provide a latch circuit, and the configuration is relatively simplified.

Further, the present invention is not limited to these embodiments, but various variations and modifications may be made without departing from the scope of the present invention.

## Claims

1. A method of obtaining device-configuration information, characterized by comprising the steps of:
a) detecting whether a housing of a device is open; and
b) obtaining device-configuration information regarding devices connected to the device when said step a) indicates that the housing has been open.

2. The method as claimed in claim 1, characterized by further comprising a step of keeping in storage an open/closed status of the housing detected by said step of detecting, wherein said step b) obtains the device-configuration information when the open/closed status of the housing indicates that the housing has been open.

3. The method as claimed in claim 2, characterized in that said step b) obtains the device-configuration information according to the open/closed status of the housing when a device-information-acquirement flag is set to valid, and obtains the device-configuration information regardless of the open/closed status of the housing when the device-information-acquirement flag is set to invalid.

4. The method as claimed in claim 1, characterized in that said step b) is performed at a time when the device is switched on or when a startup program of the device is executed.

5. A device having an information processing unit which operates based on device-configuration information obtained with regard to devices connected thereto, characterized by comprising:
a housing which houses the information processing unit;
a housing-open/closed-detection unit which detects whether said housing is open; and
a device-configuration-information obtaining unit which obtains device-configuration information regarding devices connected to the information processing unit when said housing-open/closed-detection unit indicates that the housing has been open.

6. The device as claimed in claim 5, characterized by further comprising a detection-result storing unit which keeps in storage a detection result obtained by said housing-open/closed-detection unit, and supplies the detection result to said device-configuration-information obtaining unit.

7. The device as claimed in claim 5, characterized by further comprising a setting unit which is set either to a valid status or to an invalid status, wherein if said setting unit holds the valid status, said device-configuration-information obtaining unit obtains the device-configuration information when said housing-open/closed-detection unit indicates that the housing has been open, whereas if said setting unit holds the invalid status, said device-configuration-information obtaining unit obtains the device-configuration information regardless of the detection result obtained by said housing-open/closed-detection unit.

8. The device as claimed in claim 5, characterized in that said device-configuration-information obtaining unit obtains the device-configuration information at a time when the information processing unit is switched on or when a startup program of the information processing unit is executed.

9. A control circuit for a device having an information processing unit which operates based on device-configuration information obtained with regard to devices connected thereto and having a housing which houses the information processing unit, characterized by comprising
a device-configuration-information obtaining unit which obtains device-configuration information regarding devices connected to the information processing unit when it is detected that the housing has been open.

10. The control circuit as claimed in claim 9, characterized by further comprising a detection unit which detects whether said housing is open, wherein said device-configuration-information obtaining unit obtains the device-configuration information when said detection unit indicates that the housing has been open.

11. The control circuit as claimed in claim 9, characterized by further comprising a setting unit which is set either to a valid status or to an invalid status, wherein if said setting unit holds the valid status, said device-configuration-information obtaining unit obtains the device-configuration information when said detection unit indicates that the housing has been open, whereas if said setting unit holds the invalid status, said device-configuration-information obtaining unit obtains the device-configuration information regardless of a detection result obtained by said detection unit.

12. The control circuit as claimed in claim 9, characterized in that said device-configuration-information obtaining unit obtains the device-configuration information at a time when the information processing unit is switched on or when a startup program of the information processing unit is executed.

13. A computer-readable memory medium having a program therein for causing a computer to obtain device-configuration information, said program comprising:
a housing-open/closed-detection unit configured to detect whether a housing of the computer is open; and
a device-configuration-information obtaining unit configured to obtain device-configuration information regarding devices connected to the computer when said housing-open/closed-detection unit indicates that the housing has been open.

14. The computer-readable memory medium as claimed in claim 13, characterized in that said device-configuration-information obtaining unit obtains the device-configuration information according to a detection result obtained by the housing-open/closed-detection unit when a device-information-acquirement flag is set to valid, and obtains the device-configuration information regardless of the detection result when the device-information-acquirement flag is set to invalid.

15. The computer-readable memory medium as claimed in claim 13, characterized in that said program is a startup program of the computer.
